# EUROPEAN PATENT SPECIFICATION

(11) **EP 2 930 065 B1**
(45) Date of publication and mention of the grant of the patent: **19.09.2018**
(21) Application number: 14465503.2
(22) Date of filing: 10.04.2014
(51) Int. Cl.: B60R 11/04

(54) **Protection Cover**
Schutzabdeckung
Couvercle de protection

(43) Date of publication of application: 14.10.2015
(73) Proprietor: Continental Automotive GmbH, 30165 Hannover (DE)
(72) Inventor: Dragan, Cristina, 300145 Timisoara (RO); Saad, Kmeid, 300551 Timisoara (RO)
(74) Representative: Bobbert, Christiana

(56) References cited:
- EP-A1- 2 644 419
- EP-A2- 2 407 350
- WO-A1-2007/091247
- DE-A1-102008 050 320

## Description

The invention relates to a protection cover for an electronic device of a vehicle and in particular to a protection cover for a vehicle camera mounted on the windshield of a vehicle. EP 2 644 419 A1 relates to an housing for holding and regulating the temperature of an electronic device and vehicle equipped with the said housing.

WO 2007/091247 relates to a window mounting arrangement.

DE 10 2008 050 320 A1 relates to a carrier device for attaching to a pane of a motor vehicle.

EP 2 407 350 A2 is considered to be the closest prior art and discloses a cover according to the preamble of claim 1.

In a vehicle, the number of electronic devices such as electronic sensors is increasing. A driver assistance system can comprise different kinds of sensor devices such as video cameras or radar sensors. The sensor devices can measure different parameters to provide data of the surrounding of the vehicle. A driver assistance system of the vehicle can process the data provided by the sensor devices to support the driver during driving manoeuvres. In many applications, the sensor data provided by the sensor devices are safety-relevant, because they provide the system of the vehicle with real-time data processed by the system to provide driver assistance. Accordingly, it is necessary that the electronic devices, in particular the sensor devices, operate reliable and provide sensor data in any environment continuously without interruption. The electronic sensor devices used in a vehicle can comprise different electronic components such as digital signal processors or a data memory. During operation of the electronic device, these different electronic components dissipate heat. For most electronic devices within a vehicle it is necessary to cover them by a protection cover for different reasons. For instance, an electronic device which is mounted in a passenger room of a vehicle has to be covered so that in case of a car accident, passengers may not be hurt. Further, the protection cover protects the electronic device against the environment. During operation, the electronic device covered by the protection cover generates heat which increases the temperature in an interior space of the protecttion cover. Moreover, if the environmental temperature of the vehicle is high and/or sunlight enters the windscreen of the passenger room, the interior temperature in the vehicle can be increased and additionally heat-up air within the interior space of the protection cover. With increasing temperature within the interior space of the protection cover, the operation lifetime of electronic components of the protected electronic device is diminished and the increased temperature can lead to a malfunction of the electronic sensor device so that the sensor data stream provided by the sensor device might be interrupted. The interruption of the sensor data can lead to an impairment or failure of the respective system processing the real-time sensor data.

Accordingly, it is an object of the present invention to provide a protection cover for an electronic device of a vehicle which overcomes the above-mentioned disadvantages and which increases the operation lifetime and/or operation reliability of the electronic device.

This object is achieved by a protection cover comprising the features of claim 1.

Accordingly, the invention provides according to a first aspect a protection cover for an electronic device of a vehicle, wherein the protection cover is adapted to cover and protect the electronic device positioned in an interior space of said protection cover,
wherein the protection cover comprises air intake slots at a front side of said protection cover which are shaped in such a way that the air intake slots force an airstream inside the protection cover with a high airspeed to reduce a temperature in the interior space of said protection cover.

In a possible embodiment of the protection cover according to the first aspect of the present invention, the protection cover further comprises air outtake slots at a rear side of said protection cover which are shaped and oriented such that an air circulation in the interior space of said protection cover is maximized and the airstream leaves the protection cover with a minimal airstream resistance.

In a further possible embodiment of the protection cover according to the present invention, the protection cover is adapted to cover an electronic sensor device of said vehicle.

In a further possible embodiment of the protection cover according to the present invention, the protection cover is mounted at a windshield of the vehicle, wherein the front side of the protection cover is inclined with respect to the windshield to form an air intake pocket which forces an airstream inside the protection cover.

In a further possible embodiment of the protection cover according to the present invention, an inclination angle between the front side of the protection cover and the windshield is in a range of 20-60 degrees.

In a further possible embodiment of the protection cover according to the present invention, the electronic device protected by the protection cover comprises electronic components generating during operation heat carried away by the forced-in airstream through the air outtake slots of the protection cover.

In a further possible embodiment of the protection cover according to the present invention, the electronic device protected by said protection cover comprises a camera monitoring a surrounding of the vehicle through a windshield of said vehicle.

In a further possible embodiment of the protection cover according to the present invention, the air outtake slots of the protection cover are positioned higher than the air intake slots of the protection cover when mounted at the windshield of the vehicle.

In a further possible embodiment of the protection cover according to the present invention, the air intake slots are adapted to force an airstream inside the protection cover provided by air convection within a passenger room of the vehicle.

In a still further possible embodiment of the protection cover according to the present invention, the air intake slots are adapted to force an airstream inside the protection cover provided by an air fan.

The invention further provides a vehicle camera comprising the features of claim 11.

Accordingly, the invention further provides according to a second aspect a vehicle camera protected by a protection cover,
wherein the protection cover is adapted to cover and protect the camera positioned in an interior of the protection cover, wherein the protection cover comprises air intake slots at a front side of the protection cover which are shaped and in such a way that the air intake slots force an airstream inside the protection cover with a high airspeed to reduce a temperature in the interior space of said protection cover.

In a possible embodiment of the vehicle camera according to the second aspect of the present invention, the vehicle camera is positioned at a windshield of said vehicle and monitors a surrounding of the vehicle through the windshield.

In a possible embodiment of the vehicle camera according to the second aspect of the present invention, the protection cover protecting the vehicle camera positioned at the windshield is mounted at the windshield, wherein a front side of the protection cover is inclined with respect to the windshield to form an air inlet pocket which forces an airstream inside the protection cover to reduce a temperature in the interior space of the protection cover and to cool electronic components of the vehicle camera.

In the following, possible embodiments of the protection cover for protecting an electronic device, in particular a vehicle camera, are described with reference to the enclosed figures in more detail.
- Figure 1: shows a diagram for illustrating the position of a protection cover for an electronic device in a vehicle according to an embodiment of the present invention;
- Figure 2: shows a partial view on a protection cover mounted on a windshield according to a possible embodiment of the present invention;
- Figure 3: shows a view on a protection cover for an electronic device according to a possible embodiment of the present invention.

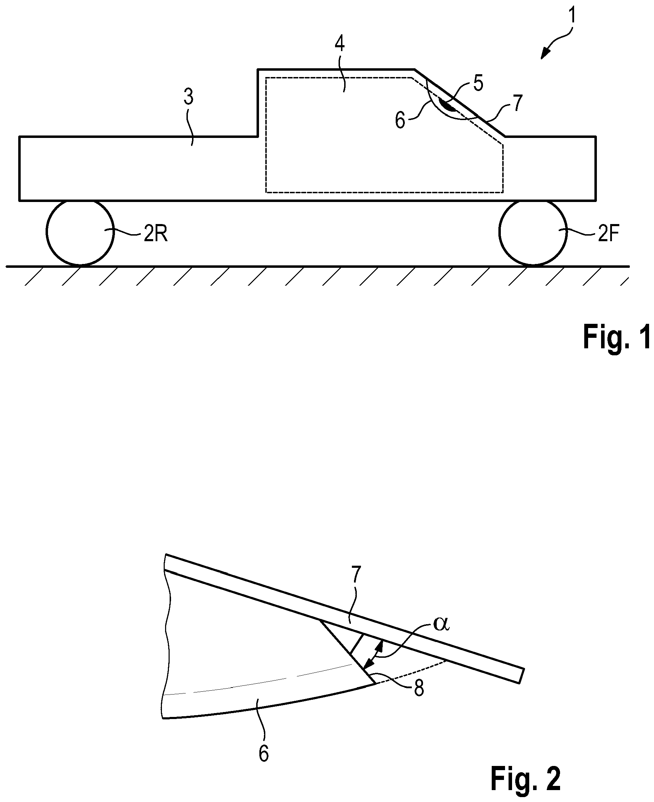

As can be seen in Figure 1, vehicle 1 such as a pick-up truck comprises front and rear wheels 2F, 2B carrying a vehicle chassis 3 of the vehicle 1. The vehicle chassis 3 comprises a passenger room 4 where a driver is located driving the vehicle 1. In the shown exemplary embodiment of Figure 1, the vehicle 1 comprises an electronic device 5 such as a sensor device protected by a protection cover 6 mounted at a windshield 7 of the vehicle 1. The sensor device 5 is in the shown exemplary embodiment a video camera monitoring a surrounding of the vehicle 1 through the windshield 7. The electronic device 5 in the interior of the protection cover 6 can comprise different electronic components each dissipating heat during operation.

The protection cover 6 is adapted to cover and protect the electronic device 5 positioned in the interior space of the protection cover 6 against physical damages or unintentional physical contact with passengers located in the passenger room of the vehicle 1.

The protection cover 6 comprises air intake slots at a front side of said protection cover 6 directed in the driving direction of the vehicle 1. These intake slots are shaped in such a way that the air intake slots force an airstream inside the protection cover 6 with a high airspeed to reduce a temperature in the interior space of the protection cover 6. The air intake slots can be shaped such that an airstream is forced into the interior of the protection cover 6 with a minimal airstream resistance. The airstream is forced inside with a relative high airspeed which exceeds in a possible embodiment 1.5m/sec.

The protection cover 6 further comprises air outtake slots at a rear side of the protection cover 6 which are shaped and oriented such that an air circulation in the interior space of the protection cover 6 is maximized and the airstream leaves the protection cover 6 with a minimal airstream resistance.

Figure 2 shows the front side of the protection cover 6 mounted at the windshield 7 in more detail. As can be seen in Figure 2, the front side 8 of the protection cover 6 is inclined with respect to the windshield 7 to form an air intake pocket which forces an airstream inside the protection cover 6. The air intake slots are positioned at the front side 8 and force the caught airstream inside the protection cover 6 with a relative high airspeed of more than 1.5m/sec. Between the front side 8 of the protection cover 6 and the windshield 7 is an inclination angle α which in a possible embodiment is set within a range of 20-60 degrees and even more in some applications. Due to the pocket shape, air which touches the dotted area illustrated in Figure 2 continues to move inside the interior of the protection cover 6.

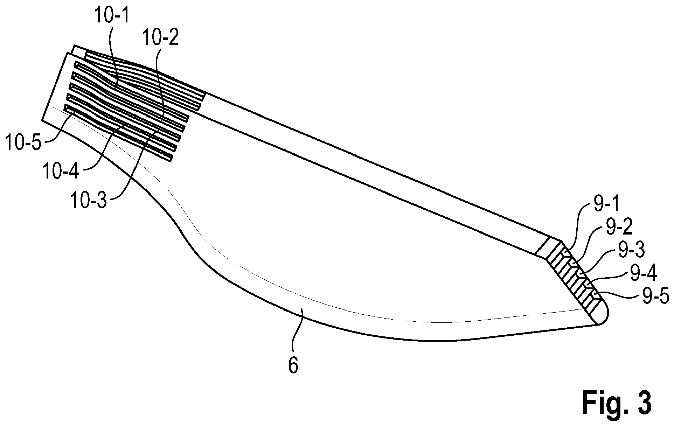

Figure 3 shows a further view on a protection cover 6 according to the present invention. As can be seen in Figure 3, air intake slots 9-1, 9-2, 9-3, 9-4, 9-5 are provided at the front side 8 of the protection cover 6 and are shaped such that they force the airstream inside the protection cover 6. Accordingly, the air intake slots 9-i comprise a specific position and further comprise a specific air slot orientation adapted to catch an airstream to move inside the protection cover 6. As is further shown in Figure 3, the protection cover 6 comprises outtake slots 10-1, 10-2, 10-3, 10-4, 10-5 on both sides at a rear side of the protection cover 6, wherein the air outtake slots 10-i are shaped and oriented such that an air circulation in the interior space of the protection cover 6 is maximized and the airstream leaves the protection cover 6 with a minimum airstream resistance. Further, the airspeed of the airstream leaving the protection cover 6 through the air outtake slots 10-i is lower than the airspeed of the airstream entering the protection cover 6 through the air intake slots 9-i. In a possible embodiment, the airspeed of the air leaving the interior of the protection cover 6 through the air outtake slots 10-i is in a range between 0.35m/sec and 0.6m/sec. The front air intake slots 9-i are positioned such that the intake of the airflow can work at the highest possible capacity. The air outtake slots 10-i positioned at the rear side of the protection cover 6 are positioned to maximize a hot air debit that leaves the protection cover 6 assuring a good air circulation inside the protection cover 6. In a preferred embodiment, the air outtake slots 10-i of the protection cover 6 are positioned higher than the air intake slots 9-i of the protection cover 6 when mounted on the windshield 7 of the vehicle 1. In the embodiment shown in Figure 3, there are five air intake slots 9-i and five air outtake slots 10-i. The number N of air intake slots 9-i and air outtake slots 10-i can vary depending on the application.

In a possible embodiment, the air intake slots 9-i are adapted to force an airstream inside the protection cover 6 when the airstream is provided by air convection within the passenger room 4 of the vehicle 1. In an alternative embodiment, the air intake slots 9-i are adapted to force an airstream inside the protection cover 6 when the airstream is provided by an air fan, for instance by an air fan of the air condition system of the vehicle 1. With the protection cover 6 according to the present invention, it is possible to reduce the temperature T in the interior by approximately 10°C with respect to conventional protection covers. By reducing the temperature T in the interior space significantly, for instance by about 10°C, the operation reliability of electronic components of the electronic device 5 protected by the protection cover 6 is increased significantly. The protection cover 6 increases the reliability and operation lifetime of the covered electronic device 5, for instance the operation lifetime of a video camera or any other sensor device within a vehicle 1 protected by the protection cover 6. This in turn increases the reliability and operation lifetime of any system based on the sensor data of a sensor device 5 covered by the protection cover 6. In a possible embodiment as shown in Figure 1, the protection cover 6 covers a single electronic device 5 such as a video camera. In an alternative embodiment, the protection cover 6 can also cover different electronic devices such as a video camera or a GPS module. In a further possible embodiment, an air fan can be integrated in the protection cover 6 at the front side of the protection cover 6, where the air intake slots 9-i are located. The air outtake slots 10-i can be positioned considering a thermal convection of the rising air due to increased temperature and can be not visible to the driver. In a possible embodiment, the protection cover 6 can be easily mounted on a vehicle chassis of the vehicle 1 and be replaceable. The protection cover 6 as illustrated in Figure 6 can comprise a streamlined shape adapted to force air circulation in the interior space of the protection cover 6 so that the airstream leaves the protection cover 6 with a minimal airstream resistance. In the embodiment shown in Figure 1, the protection cover 6 is mounted at an inclined windshield 7 of the vehicle 1. In other embodiments, the protection cover 6 can be mounted to other interior surfaces within the vehicle 1. Depending on the inclination angle of the surface, an inclination angle α of the front side 8 as illustrated in Figure 2 is adapted to maximize the air intake in the air intake slots into the interior of the protection cover 6.

## Claims

1. A protection cover (6) of a vehicle (1),
wherein the protection cover (6) is configured to be mounted at a windshield (7) of said vehicle (1) and covers and protects the electronic device (5)
positioned in an interior space of said protection cover (6), **characterised in that** the protection cover (6) comprises air intake slots (9) at a front side (8) of said protection cover (6) and air outtake slots (10) at a rear side of said protection cover (6), wherein the air intake slots (9) are directed in a driving direction of the vehicle (1) and wherein an inclination angle (α) between the front side (8) of the protection cover (6) and the windshield (7) is in the range of 20-60 degrees, wherein the air outtake slots (10) at the rear side of the protection cover are positioned higher than the air intake slots (9) at the front side (8) of the protection cover (6) to force an airstream inside the protection cover (6) with a high air speed to reduce the temperature in the interior space of said protection cover (6).

2. The protection cover according to claim 1, wherein the air outtake slots (10) at the rear side of said protection cover (6) are shaped and oriented such that an air circulation in the interior space of said protection cover (6) is maximized and the airstream leaves the protection cover (6) with a minimal airstream resistance.

3. The protection cover according to claim 1 or 2, wherein the protection cover (6) is adapted to cover an electronic device (5) of said vehicle (1).

4. The protection cover according to one of the preceding claims 1 to 3, wherein the air intake slots (9) are adapted to force an airstream inside the protection cover (6) provided by an air fan.

5. The protection cover according to one of the preceding claims, wherein the protection cover (6) is mounted at the windshield (7) of said vehicle, wherein the front side of said protection cover (6) is inclined with respect to said windshield (7) to form an air intake pocket which forces and airstream inside the protection cover (6) .

6. A vehicle camera protected by a protection cover (6) according to one of the preceding claims 1 to 5.

## Patentansprüche

1. Schutzabdeckung (6) eines Fahrzeugs (1),
wobei die Schutzabdeckung (6) zur Anbringung an einer Windschutzscheibe (7) des Fahrzeugs (1) gestaltet ist und die in einem Innenraum der Schutzabdeckung (6) positionierte elektronische Vorrichtung (5) abdeckt und schützt, **dadurch gekennzeichnet, dass**
die Schutzabdeckung (6) Lufteintrittsschlitze (9) an einer Vorderseite (8) der Schutzabdeckung (6) und Luftaustrittsschlitze (10) an einer Rückseite der Schutzabdeckung (6) umfasst, wobei die Lufteintrittsschlitze (9) in eine Fahrtrichtung des Fahrzeugs (1) gerichtet sind und wobei ein Neigungswinkel (α) zwischen der Vorderseite (8) der Schutzabdeckung (6) und der Windschutzscheibe (7) im Bereich von 20 - 60 Grad ist, wobei die Luftaustrittsschlitze (10) an der Rückseite der Schutzabdeckung höher als die Lufteintrittsschlitze (9) an der Vorderseite (8) der Schutzabdeckung (6) positioniert sind, um einen Luftstrom mit einer hohen Luftgeschwindigkeit in die Schutzabdeckung (6) zu zwingen, um die Temperatur im Innenraum der Schutzabdeckung (6) zu senken.

2. Schutzabdeckung nach Anspruch 1, wobei die Luftaustrittsschlitze (10) an der Rückseite der Schutzabdeckung (6) so gestaltet und ausgerichtet sind, dass eine Luftzirkulation im Innenraum der Schutzabdeckung (6) maximiert wird und der Luftstrom die Schutzabdeckung (6) mit einem minimalen Luftstromwiderstand verlässt.

3. Schutzabdeckung nach Anspruch 1 oder 2, wobei die Schutzabdeckung (6) zum Abdecken einer elektronischen Vorrichtung (5) des Fahrzeugs (1) ausgeführt ist.

4. Schutzabdeckung nach einem der vorhergehenden Ansprüche 1 bis 3, wobei die Lufteintrittsschlitze (9) zum Zwingen eines von einem Luftgebläse bereitgestellten Luftstroms in das Innere der Schutzabdeckung (6) ausgeführt sind.

5. Schutzabdeckung nach einem der vorhergehenden Ansprüche, wobei die Schutzabdeckung (6) an der Windschutzscheibe (7) des Fahrzeugs angebracht ist, wobei die Vorderseite der Schutzabdeckung (6) in Bezug auf die Windschutzscheibe (7) geneigt ist, um eine Lufteintrittstasche zu bilden, die einen Luftstrom in das Innere der Schutzabdeckung (6) zwingt.

6. Fahrzeugkamera, geschützt durch eine Schutzabdeckung (6) nach einem der vorhergehenden Ansprüche 1 bis 5.

## Revendications

1. Couvercle de protection (6) d'un véhicule (1),
le couvercle de protection (6) étant configuré pour être monté sur un pare-brise (7) dudit véhicule (1) et couvrant et protégeant l'appareil électronique (5) positionné dans un espace intérieur dudit couvercle de protection (6),
**caractérisé en ce que**
le couvercle de protection (6) comprend des fentes d'admission d'air (9) sur un côté avant (8) dudit couvercle de protection (6) et des fentes de sortie d'air (10) sur un côté arrière dudit couvercle de protection (6), les fentes d'admission d'air (9) étant dirigées dans un sens de conduite du véhicule (1) et un angle d'inclinaison (α) entre le côté avant (8) du couvercle de protection (6) et le pare-brise (7) étant dans la plage de 20-60 degrés, les fentes de sortie d'air (10) sur le côté arrière du couvercle de protection étant positionnées plus haut que les fentes d'admission d'air (9) sur le côté avant (8) du couvercle de protection (6) pour faire pénétrer par force un flux d'air à l'intérieur du couvercle de protection (6) avec une vitesse d'air élevée afin de réduire la température dans l'espace intérieur dudit couvercle de protection (6) .

2. Couvercle de protection selon la revendication 1, les fentes de sortie d'air (10) sur le côté arrière dudit couvercle de protection (6) étant formées et orientées de telle sorte qu'une circulation d'air dans l'espace intérieur dudit couvercle de protection (6) est optimisée et que le flux d'air quitte le couvercle de protection (6) avec une résistance de flux d'air minimale.

3. Couvercle de protection selon la revendication 1 ou 2, le couvercle de protection (6) étant conçu pour couvrir un appareil électronique (5) dudit véhicule (1).

4. Couvercle de protection selon l'une des revendications précédentes 1 à 3, les fentes d'admission d'air (9) étant conçues pour faire pénétrer par force dans le couvercle de protection (6) un flux d'air fourni par un ventilateur à air.

5. Couvercle de protection selon l'une des revendications précédentes, le couvercle de protection (6) étant monté sur le pare-brise (7) dudit véhicule, le côté avant dudit couvercle de protection (6) étant incliné relativement au susdit pare-brise (7) pour former une poche d'admission d'air, laquelle fait pénétrer par force un flux d'air dans le couvercle de protection (6) .

6. Caméra de véhicule protégée par un couvercle de protection (6) selon l'une des revendications précédentes 1 à 5.
